# EUROPÄISCHE PATENTSCHRIFT

(11) **EP 3 527 409 B1**
(45) Veröffentlichungstag und Bekanntmachung des Hinweises auf die Patenterteilung: **10.08.2022**
(21) Anmeldenummer: 19155130.8
(22) Anmeldetag: 01.02.2019
(51) Int. Cl.: B60H 1/00, F25D 17/00, B65D 90/02, B62D 33/04, B60P 3/20, B65D 88/74

(54) **NUTZFAHRZEUGAUFBAU FÜR KÜHLFAHRZEUGE**
COMMERCIAL VEHICLE STRUCTURE FOR REFRIGERATED ROAD VEHICLES
CHÂSSIS DE VÉHICULE UTILITAIRE POUR VÉHICULES FRIGORIFIQUES

(30) Priorität: 15.02.2018 DE 102018001180
(43) Veröffentlichungstag der Anmeldung: 21.08.2019
(73) Patentinhaber: Fahrzeugwerk Bernard Krone GmbH & Co. KG, 49757 Werlte (DE)
(72) Erfinder: Holbech, Sören, 8883 Gjern (DK); Korsbakke, Keld, 8600 Silkeborg (DK)
(74) Vertreter: Busse & Busse

(56) Entgegenhaltungen:
- WO-A1-2015/179138
- US-A- 4 399 737
- US-A- 4 593 536
- US-A- 5 807 046
- US-A- 6 132 307

## Beschreibung

Die Erfindung bezieht sich auf einen Nutzfahrzeugaufbau für Kühlfahrzeuge mit einem von einem Laderaumboden, Seitenwänden, einem Dach, einer Heckwand oder Heckwandtüren sowie einer Stirnwand begrenzten Laderaum, wobei die Stirnwand von Luftführungsprofilen begrenzte Luftführungen aufweist, die einem an der Stirnwand vorgesehenen Kühlgerät für den Laderaum zugeordnet sind.

Nutzfahrzeugaufbauten der vorgenannten Art sind bekannt und haben Luftführungsprofile, die aus mehreren Einzelteilen bestehen, die auf der dem Laderaum zugewandten Seite der Stirnwand des Nutzfahrzeugaufbaus aufgebracht sind. Erwärmte Luft wird dabei in den Luftführungskanälen zwischen den aufgesetzten Luftführungsprofilen zwischen der Stirnwand und dem auf den Laderaumboden abgestellten Ladegut zum Kühlaggregat zurücktransportiert. Zusätzlich sollen diese Luftleitprofile auch noch die Funktion eines Anfahrschutzes und einer Anlage für die Ladung darbieten und damit auch einen Palettenanschlag bzw. einen Abstandshalter darstellen.

Nachteilig ist hierbei, dass die Luftleitprofile durch herkömmliche Verbindungen wie Schrauben und Niete mit der Stirnwand verbunden sind, welche sowohl die Luftleitprofile als auch die Stirnwand schwächen. Darüber hinaus ist es außerordentlich schwierig und auch zeitaufwändig, die Stirnwand inklusive aller mit dieser verbundenen Bauteile zu reinigen und zu desinfizieren. Darauf ist aber insbesondere bei Kühlfahrzeugen großen Wert zu legen ist, da im Laderaum von Kühlfahrzeugen vielfach verderbliche Waren wie Lebensmittel transportiert werden. Daher ist die Hygiene in einem Laderaum eines Kühlfahrzeuges mit hohem Aufwand sicherzustellen. Darüber hinaus müssen auch Spalte und ggf. auch Risse zwischen Stirnwand und Sockelleisten entweder aufwändig gereinigt oder durch Versiegelungen geschlossen werden. Solche Versiegelungen altern jedoch und weisen ihrerseits mit der Zeit Risse und Spalte auf, was wiederum eine erhöhte Gefahr von Keimbildungen mit sich bringt. Der Reinigungsaufwand mit chemischen Reinigungsmitteln ist daher erheblich, wodurch Umweltbelastungen einhergehen.

Aus der US 4,399,737 ist ein Nutzfahrzeugaufbau der eingangs genannten Art bekannt, bei dem an der Stirnwand des Nutzfahrzeuges über Befestigungslaschen ein Paneel mit in den Laderaum ragenden Luftführungen zu befestigen ist, wobei sich an den Befestigungslaschen Verschmutzungen anlagern können, die insbesondere bei einem Transport von Lebensmitteln in dem Laderaum des Nutzfahrzeugaufbaus hinsichtlich des einzuhaltenden Hygienestandards nachteilig auswirken.

Des Weiteren ist aus der US 5,807,046 A ein Nutzfahrzeugaufbau bekannt, bei dem ebenfalls ein Kühlaggregat in der Stirnwand des Nutzfahrzeugaufbaus durch besondere Befestigungsmittel angebracht, welches Luftführungskanäle aufweist. Auch dieses ist über besonderen Befestigungsmittel mit der Stirnwand zu verbinden mit der zuvor beschriebenen Gefahr der Verunreinigung und der sich daraus ergebenen Problematik hinsichtlich einzuhaltender Hygienestandards insbesondere bei einem Lebensmitteltransport.

Es ist Aufgabe der vorliegenden Erfindung, einen Nutzfahrzeugaufbau der eingangs genannten Art derart weiterzubilden, dass der Laderaum mit vermindertem Aufwand zu reinigen ist und der Hygienestandard innerhalb des Fahrzeugaufbaus und damit innerhalb des Laderaumes mit vermindertem Aufwand sicherzustellen ist.

Zur Lösung dieser Aufgabe zeichnet sich der Nutzfahrzeugaufbau der eingangs genannten Art dadurch aus, dass die Stirnwand (9) eine dem Laderaum zugewandte Innendeckschicht (12) und eine mit Abstand zu dieser angeordnete Außendeckschicht (20) aufweist, zwischen denen ein mit einem Wärmedämmmaterial ausgekleideter Hohlraum ausgebildet ist, dass die Innendeckschicht (12) der Stirnwand mit in der Innendeckschicht (12) ausgeformten Luftführungsprofilen (13) versehen ist und dass die Luftführungskanäle (14), die Luftführungsprofile (13) und die Innendeckschicht (12) einstückig ausgebildet sind.

Damit ist ein Nutzfahrzeugaufbau zur Verfügung gestellt, bei dem die Stirnwand eine Innendeckschicht aufweist, die als profiliert ausgebildetes Bauteil sowohl die Luftführung als auch die Luftführungsprofile als in die Innendeckschicht integrierte Bereiche aufweist, die mit einem einmaligen Herstellungsprozess gefertigt werden kann, ohne dass es nachträglicher Befestigungen bedarf. Von der Querschnittsgeometrie können die Luftführungsprofile auch trapezförmig oder andersförmig ausgebildet sein mit z. B. abgeflachten, dem Laderaum zugewandten Enden. Zwischen diesen Luftführungsprofilen erstrecken sich die Luftführungen, die dem Kühlgerät zugeordnet sind. Die Luftführungsprofile können gleichzeitig einen Anfahrschutz und eine Anlage als Palettenanschlag bzw. Ladungsanschlag ausbilden. Diese haben einen zu der dem Laderaum abgeneigten Seite offenen inneren Raum bzw. Hohlraum, in den auch Verstärkungen einzusetzen sind, beispielsweise Aluminium oder Holzlatten oder Holzleisten.

Insgesamt bieten sich jedoch an dieser dem Laderaum zugewandten Stirnwand keinerlei Spalte oder Räume im Bereich von Muttern von z. B. Befestigungsschrauben, an denen sich Schmutz oder Keime absetzen könnten, die nur schwer zu reinigen sind. Insgesamt ist der Reinigungsaufwand dieser Stirnwand wesentlich geringer und schneller zu vollziehen, so dass auch der Hygienestandard in dem Laderaum des Nutzfahrzeuges wesentlich einfacher sicherzustellen ist und die Umwelt belastende Reinigungsmittel eingespart werden.

Die Stirnwand ist so gestaltet, dass sie die einteilige bzw. einstückige Innendeckschicht und eine mit Abstand zu dieser angeordnete Außendeckschicht aufweist, zwischen denen eine die Innendeckschicht nach hinten hin, d. h. zur Außendeckschicht abschließende Platte aufweist, beispielsweise eine Holzplatte, wobei der Abstand zwischen dieser Holzplatte und der Außendeckschicht durch ein wärmedämmendes Material ausgeschäumt werden kann. Die Luftführungen und auch die Luftführungsprofile können sich bis zu einer Luftleitplatte erstrecken, hinter der das Kühlgerät angeordnet ist. Über einen Luftauslass kann gekühlte Luft wieder vom Kühlgerät in den Laderaum strömen. Erwärmte Luft aus dem Laderaum wird über Luftführungen der Stirnwand zugeführt und gelangt von diesen von unten hinter die Luftleitplatte.

Wesentliche weitere Ausgestaltungen sind weiteren Unteransprüchen, der nachfolgenden Beschreibung und der Zeichnung zu entnehmen. In der Zeichnung zeigen:
- Fig. 1:: Ein perspektivisches Ausführungsbeispiel eines Nutzfahrzeuges mit einem Ausführungsbeispiel eines Nutzfahrzeugaufbaus;
- Fig. 2:: das Ausführungsbeispiel des Nutzfahrzeugaufbaus nach Fig. 1 mit Blick in den Laderaum bei nicht dargestellter Heckwand und einer nicht dargestellten Seitenwand;
- Fig. 3:: vom Laderaum betrachtet einen Blick auf ein Ausführungsbeispiel einer Stirnwand ohne Luftleitplatte;
- Fig. 4:: die Darstellung nach Fig. 3 versehen mit Schnittlinien A-A, B-B und C-C;
- Fig. 5:: perspektivisch eine Ansicht auf die Schnittlinie gemäß A-A;
- Fig. 6:: die perspektivische Darstellung gemäß der Schnittlinie B-B in einer perspektivischen Darstellung, und
- Fig. 7:: die Schnittlinie C-C in einer perspektivischen Darstellung.

In der Zeichnung sind übereinstimmende Teile mit übereinstimmenden Bezugsziffern versehen.

Allgemein mit 1 ist ein Nutzfahrzeug beziffert, dass in den gezeigten Ausführungsbeispielen als auf einem Fahrgestell 2 und Rädern 3 abgestützter Sattelauflieger ausgebildet ist, mit einem Nutzfahrzeugaufbau 4 mit Seitenwänden 5, einem Dach 6, einem Laderaumboden 7, einer Heckwand 8, die auch z. B. zwei aufzuschwenkende Hecktüren aufweisen kann, sowie einer Stirnwand 9, an der ein Kühlgerät 10 befestigt ist.

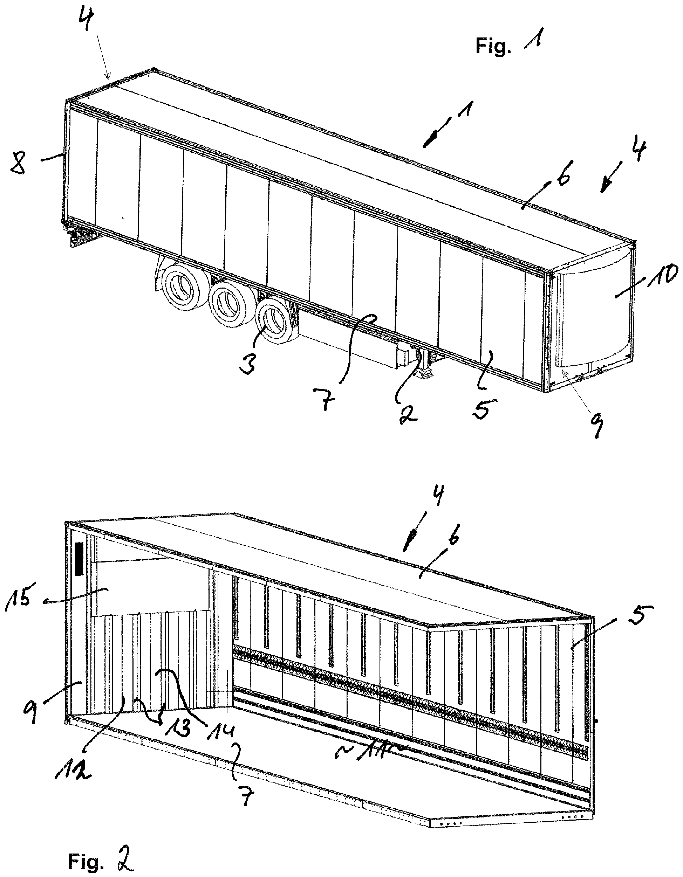

Fig. 2 zeigt einen Blick in den Laderaum 11 und einen Blick auf die Innenseite der Stirnwand 9 mit der Innendeckschicht 12, die dem Laderaum 11 zugeordnet ist. Diese Innendeckschicht 12 ist als profiliertes Aluminiumblechteil ausgebildet mit zum Laderaum zugewandten Luftführungsprofilen 13 und zwischen diesen Luftführungsprofilen 13 gelegenen Luftführungen 14, die sich bis zu einer Luftleitplatte 15 erstrecken, die mit Abstand zur Innendeckschicht 12 vorgesehen ist und eine Luftzuführung für das Kühlgerät 10 bildet. Die Innendeckschicht 12 und die Luftführungsprofile 13 sowie Luftführungskanäle 14 sind einstückig ausgebildet, so dass für die Befestigung der Luftführungsprofile 13 keinerlei Befestigungsmittel wie Schrauben, Niete u. dgl. erforderlich sind.

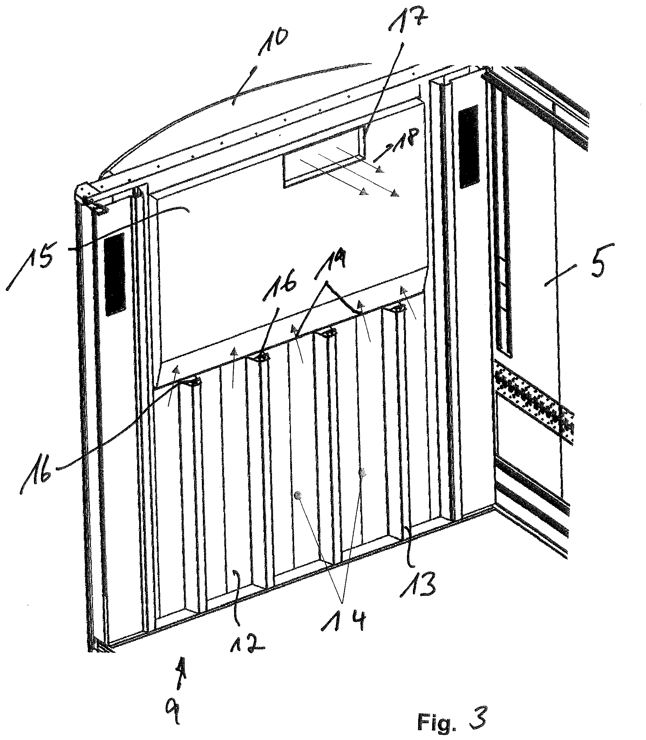

Fig. 3 zeigt noch einmal vergrößert die Stirnwand 9 sowie angedeutet Seitenwände 5 sowie die Innendeckschicht 12, die Luftführungskanäle 14 sowie die Luftführungsprofile 13. Die Luftführungsprofile 13 bilden auch Abstandshalter und Paletten- bzw. Ladungsanschläge, so dass sie in ihrem inneren Raum teilweise mit einer Verstärkung in Gestalt von Holzlatten 16 armiert sind. Es ist eine Luftöffnung 17 vom Kühlgerät 10 hin zum Laderaum 11 vorgesehen, so dass gekühlte Luft, angedeutet durch die Pfeile 18, dem Laderaum 11 wieder zugeführt werden kann. Erwärmte Luft wird über die Luftführungskanäle 14, durch die Pfeile 19 angedeutet, über das Luftleitblech 15 dem Kühlgerät 10 zugeführt.

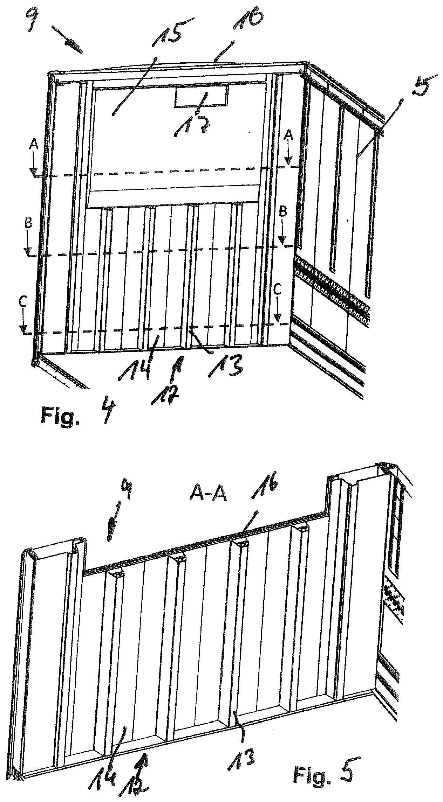

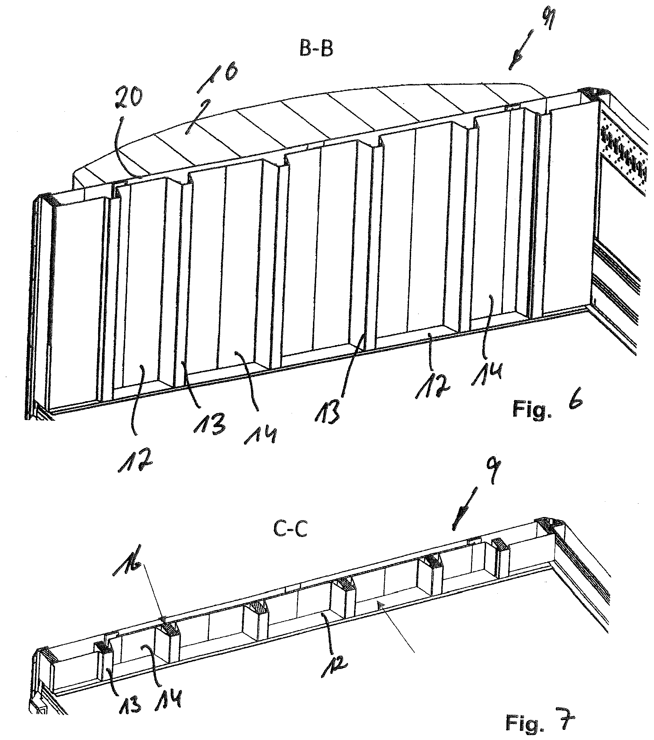

Die Ansichten nach den Fig. 4, 5, 6 und 7 verdeutlichen noch einmal den Aufbau der Stirnwand 4 mit dem dort adaptierten Kühlgerät 10 der Innendeckschicht 12 mit den Luftführungsprofilen 13 und den Luftführungskanälen 14, aber auch, dass mit Abstand zu der Innendeckschicht 12 auch eine Außendeckschicht 20 vorgesehen ist, wobei hinter der Innendeckschicht 12 eine sich über die Breite und Höhe teilweise erstreckende Platte, beispielsweise eine Holzplatte, erstrecken kann, die hinterschäumt wird bis zur Außendeckschicht 20 mit einem wärmedämmenden Material. In Fig. 7 sind wiederum die Holzleisten 16 als Verstärkungen angedeutet.

## Patentansprüche

1. Nutzfahrzeugaufbau (4) für Kühlfahrzeuge (1) mit einem von einem Laderaumboden (7), Seitenwänden (5), einem Dach (6) sowie von einer Stirnwand (9) und von einer Heckwand (10) umgrenzten Laderaum (11), wobei an der Stirnwand (9) ein Kühlgerät (10) vorgesehen und an der Stirnwand (9) dem Kühlgerät (10) zugeordnete Luftführungskanäle (14) ausgebildet sind, die von Luftleitprofilen (13) begrenzt sind, **dadurch gekennzeichnet, dass** die Stirnwand (9) eine dem Laderaum zugewandte Innendeckschicht (12) und eine mit Abstand zu dieser angeordnete Außendeckschicht (20) aufweist, zwischen denen ein mit einem Wärmedämmmaterial ausgekleideter Hohlraum ausgebildet ist, dass die Innendeckschicht (12) der Stirnwand mit in der Innendeckschicht (12) ausgeformten Luftführungsprofilen (13) versehen ist und dass die Luftführungskanäle (14), die Luftführungsprofile (13) und die Innendeckschicht (12) einstückig ausgebildet sind.

2. Nutzfahrzeugaufbau (4) nach Anspruch 1, **dadurch gekennzeichnet, dass** die mit den Luftführungsprofilen (13) versehene Innendeckschicht (12) als profilierte Innendeckschicht aus Aluminium oder Edelstahl ausgebildet ist.

3. Nutzfahrzeugaufbau (4) nach Anspruch 1 oder 2, **dadurch gekennzeichnet, dass** die zum Laderaum zugewandten Luftführungsprofile (13) zur auf der dem Laderaum abgewandten Rückseite der Innendeckschicht (12) offen ausgebildet sind.

4. Nutzfahrzeugaufbau (4) nach einem der Ansprüche 1 bis 3, **dadurch gekennzeichnet, dass** die Innendeckschicht (12) zumindest teilweise von einer Platte hinterlegt ist.

5. Nutzfahrzeugaufbau (4) nach Anspruch 4, **dadurch gekennzeichnet, dass** die die Innendeckschicht (12) hinterlegende Platte aus einem Holzmaterial besteht.

6. Nutzfahrzeugaufbau (4) nach einem der Ansprüche 1 bis 5, **dadurch gekennzeichnet, dass** der Hohlraum durch einen Schaum ausgeschäumt ist.

7. Nutzfahrzeugaufbau (4) nach einem der vorangehenden Ansprüche, **dadurch gekennzeichnet, dass** Innenräume eines aus der Innendeckschicht (12) ausgeformten Luftführungsprofils (13) mit einer jeweiligen Verstärkung (16) versehen ist.

8. Nutzfahrzeugaufbau (4) nach Anspruch 7, **dadurch gekennzeichnet, dass** die jeweilige Verstärkung (16) als Holzstab ausgebildet ist.

9. Nutzfahrzeugaufbau (4) nach einem der vorangehenden Ansprüche, **dadurch gekennzeichnet, dass** die aus der Innendeckschicht (12) ausgeformten Luftführungsprofile (13) sich über einen Teilbereich der Stirnwand (9) in vertikaler Ausrichtung erstrecken und in eine dem Kühlgerät (10) zugeordnete Luftleitplatte (15) münden.

10. Nutzfahrzeugaufbau (4) nach einem der vorangehenden Ansprüche, **dadurch gekennzeichnet, dass** die Innendeckschicht (12) mit dem Laderaumboden (7) zu einer Baueinheit verschweißt ist.

11. Nutzfahrzeugaufbau (4) nach einem der vorangehenden Ansprüche, **dadurch gekennzeichnet, dass** die Innendeckschicht (12) aus mehreren Teilen zu einer einstückigen Baueinheit verschweißt ist.

12. Nutzfahrzeugaufbau nach Anspruch 1, **dadurch gekennzeichnet, dass** die mit den Luftführungsprofilen (13) versehene Innendeckschicht (12) als profilierte Innendeckschicht aus einem GFK-Material ausgebildet ist.

## Claims

1. Commercial vehicle body (4) for refrigerated vehicles (1), having a loading space (11) which is delimited by a loading-space floor (7), side walls (5), and a roof (6), and also by a front wall (9) and by a rear wall (10), wherein a cooling unit (10) is provided on the front wall (9) and air-guiding channels (14) assigned to the cooling unit (10) and delimited by air-directing profiles (13) are formed on the front wall (9), **characterized in that** the front wall (9) has an inner cover layer (12), which faces towards the loading space, and an outer cover layer (20), which is arranged at a distance from said inner cover layer, between which a cavity lined with a heat-insulation material is formed, **in that** the inner cover layer (12) of the front wall is provided with air-guiding profiles (13) formed in the inner cover layer (12), and **in that** the air-guiding channels (14), the air-guiding profiles (13) and the inner cover layer (12) are formed in one piece.

2. Commercial vehicle body (4) according to Claim 1, **characterized in that** the inner cover layer (12) provided with the air-guiding profiles (13) is in the form of a profiled inner cover layer composed of aluminium or high-grade steel.

3. Commercial vehicle body (4) according to Claim 1 or 2, **characterized in that** the air-guiding profiles (13), which face towards the loading space, are formed so as to be open towards the rear side, facing away on the from the loading space, of the inner cover layer (12).

4. Commercial vehicle body (4) according to one of Claims 1 to 3, **characterized in that** the inner cover layer (12) is backed at least partially by a plate.

5. Commercial vehicle body (4) according to Claim 4, **characterized in that** the plate backing the inner cover layer (12) consists of a wood material.

6. Commercial vehicle body (4) according to one of Claims 1 to 5, **characterized in that** the cavity is filled by a foam.

7. Commercial vehicle body (4) according to one of the preceding claims, **characterized in that** interior spaces of an air-guiding profile (13) formed from the inner cover layer (12) are provided with a respective reinforcement (16).

8. Commercial vehicle body (4) according to Claim 7, **characterized in that** the respective reinforcement (16) is in the form of a wooden bar.

9. Commercial vehicle body (4) according to one of the preceding claims, **characterized in that** the air-guiding profiles (13) formed from the inner cover layer (12) extend over a sub-region of the front wall (9) with a vertical orientation and open out into an air-directing plate (15) which is assigned to the cooling unit (10).

10. Commercial vehicle body (4) according to one of the preceding claims, **characterized in that** the inner cover layer (12) is welded to the loading-space floor (7) to form a structural unit.

11. Commercial vehicle body (4) according to one of the preceding claims, **characterized in that** the inner cover layer (12) is welded from multiple parts to form a one-piece structural unit.

12. Commercial vehicle body according to Claim 1, **characterized in that** the inner cover layer (12) provided with the air-guiding profiles (13) is in the form of a profiled inner cover layer composed of a GFRP material.

## Revendications

1. Châssis de véhicule utilitaire (4) pour véhicules frigorifiques (1) comportant un espace de chargement (11) délimité par un plancher d'espace de chargement (7), des parois latérales (5), un toit (6) ainsi que par une paroi avant (9) et par une paroi arrière (10), un appareil frigorifique (10) étant prévu au niveau de la paroi avant (9) et des canaux de guidage d'air (14) associés à l'appareil frigorifique (10) étant réalisés au niveau de la paroi avant (9), lesquels canaux sont limités par des profilés déflecteurs d'air (13), **caractérisé en ce que** la paroi avant (9) présente une couche de recouvrement interne (12) tournée vers l'espace de chargement et une couche de recouvrement externe (20) disposée à distance de celle-ci, couches entre lesquelles est réalisé un espace creux revêtu d'un matériau d'isolation thermique, **en ce que** la couche de recouvrement interne (12) de la paroi avant est dotée de profilés de guidage d'air (13) formés dans la couche de recouvrement interne (12) et **en ce que** les canaux de guidage d'air (14), les profilés de guidage d'air (13) et la couche de recouvrement interne (12) sont réalisés d'une seule pièce.

2. Châssis de véhicule utilitaire (4) selon la revendication 1, **caractérisé en ce que** la couche de recouvrement interne (12) dotée des profilés de guidage d'air (13) est réalisée sous forme de couche de recouvrement interne profilée en aluminium ou en acier fin.

3. Châssis de véhicule utilitaire (4) selon la revendication 1 ou 2, caractérisé ce que les profilés de guidage d'air (13) tournés vers l'espace de chargement sont réalisés de manière ouverte vers le côté arrière, opposé sur le à l'espace de chargement, de la couche de recouvrement interne (12).

4. Châssis de véhicule utilitaire (4) selon l'une des revendications 1 à 3, **caractérisé en ce que** la couche de recouvrement interne (12) est doublée au moins partiellement d'une plaque.

5. Châssis de véhicule utilitaire (4) selon la revendication 4, **caractérisé en ce que** la plaque doublant la couche de recouvrement interne (12) est constituée d'un matériau en bois.

6. Châssis de véhicule utilitaire (4) selon l'une des revendications 1 à 5, **caractérisé en ce que** l'espace creux est garni d'une mousse.

7. Châssis de véhicule utilitaire (4) selon l'une des revendications précédentes, **caractérisé en ce que** des espaces intérieurs d'un profilé de guidage d'air (13) formé à partir de la couche de recouvrement interne (12) sont dotés d'un renforcement (16) respectif.

8. Châssis de véhicule utilitaire (4) selon la revendication 7, **caractérisé en ce que** le renforcement (16) respectif est réalisé sous forme de baguette en bois.

9. Châssis de véhicule utilitaire (4) selon l'une des revendications précédentes, **caractérisé en ce que** les profilés de guidage d'air (13) formés à partir de la couche de recouvrement interne (12) s'étendent sur une région partielle de la paroi avant (9) dans la direction verticale et débouchent dans une plaque déflectrice d'air (15) associée à l'appareil frigorifique (10).

10. Châssis de véhicule utilitaire (4) selon l'une des revendications précédentes, **caractérisé en ce que** la couche de recouvrement interne (12) est soudée sur le plancher d'espace de chargement (7) pour former une unité structurale.

11. Châssis de véhicule utilitaire (4) selon l'une des revendications précédentes, **caractérisé en ce que** la couche de recouvrement interne (12) est soudée à partir de plusieurs parties pour former une unité structurale d'une seule pièce.

12. Châssis de véhicule utilitaire selon la revendication 1, **caractérisé en ce que** la couche de recouvrement interne (12) dotée des profilés de guidage d'air (13) est réalisée sous forme de couche de recouvrement interne profilée en une matière plastique renforcée par des fibres de verre.
